# EUROPÄISCHE PATENTSCHRIFT

(11) **EP 1 629 265 B1**
(45) Veröffentlichungstag und Bekanntmachung des Hinweises auf die Patenterteilung: **10.01.2007**
(21) Anmeldenummer: 04734681.2
(22) Anmeldetag: 25.05.2004
(51) Int. Cl.: G01N 21/64, C10L 1/00, G01N 21/31

(54) **AUTOMATISCHE DETEKTION WENIGSTENS EINES IN EINEM FLÜSSIGEN BETRIEBSSTOFF ENTHALTENEN FLUORESZIERENDEN UND/ODER LICHTABSORBIERENDEN INDIKATORS WÄHREND DES EINFÜLLVORGANGS DES BETRIEBSSTOFFS IN EINE MASCHINE**
AUTOMATIC DETECTION OF AT LEAST ONE FLUORESCENT AND/OR LIGHT-ABSORBING INDICATOR CONTAINED IN A LIQUID SERVICE FLUID DURING THE FILLING OF A MACHINE WITH SAID SERVICE FLUID
DETECTION AUTOMATIQUE D'AU MOINS UN INDICATEUR FLUORESCENT ET/OU PHOTOABSORBANT CONTENU DANS UN AGENT DE FONCTIONNEMENT LIQUIDE LORS DU PROCESSUS DE REMPLISSAGE DE L'AGENT DE FONCTIONNEMENT DANS UNE MACHINE

(30) Priorität: 04.06.2003 DE 10325537
(43) Veröffentlichungstag der Anmeldung: 01.03.2006
(73) Patentinhaber: Fuchs Petrolub AG, 68169 Mannheim (DE)
(72) Erfinder: LUTHER, Rolf, 67346 Speyer (DE); SEYFERT, Christian, 68167 Mannheim (DE); STUMM, Fritz, 69115 Heidelberg (DE)
(74) Vertreter: Reiser, Tonio Andreas
(86) Internationale Anmeldenummer: PCT/EP2004/005603
(87) Internationale Veröffentlichungsnummer: WO 2004/109265

(56) Entgegenhaltungen:
- US-A- 5 225 679
- US-A- 5 958 780

## Beschreibung

Die vorliegende Erfindung betrifft ein Verfahren zum automatischen Detektieren von wenigstens einem in einem flüssigen Betriebsstoff enthaltenen fluoreszierenden und/oder lichtabsorbierenden Indikator während des Einfüllvorgangs des Betriebsstoffs in eine Maschine sowie eine Maschine mit einer darin integrierten Vorrichtung zur Durchführung des Verfahrens.

Flüssige Betriebsstoffe im Sinne der vorliegenden Anmeldung sind Schmieröl, Motoröl und Hydrauliköl.

Die Auswahl der Betriebsstoffe von Maschinen, insbesondere des Schmieröls bei Verbrennungskraftmaschinen, ist von zunehmender Bedeutung für die Lebensdauer der Maschine. Ein ungeeignetes Öl kann unter Umständen zum sofortigen Ausfall der Maschine führen, während ein besonders hochwertiges Schmieröl eine überdurchschnittliche Einsatzdauer gewährleistet. Beim manuellen Einfüllgang beim Ölwechsel oder beim Nachfüllen können Irrtümer durch die versehentliche Wahl eines ungeeigneten Schmieröls nicht ausgeschlossen werden. Dies ist von zunehmender Bedeutung, da z.B. Kraftfahrzeugmotoren vermehrt auf den jeweiligen Motortyp zugeschnittene und abgestimmte Schmieröle benötigen. Sofern das Einfüllen eines ungeeigneten Betriebsstoffes nicht rechtzeitig erkannt wird, kann es zu erheblichen nachteiligen Auswirkungen, wie z.B. einen vorzeitigen Ausfall der Maschine kommen.

Weiterhin ist die Qualität eines Betriebsstoffs entscheidend für die Bestimmung des Betriebsstoffwechselintervalls. Moderne Kraftfahrzeuge verfügen zwar bereits über Bordrechner, welche die Ölwechselintervalle in Abhängigkeit von verschiedenen Betriebsparametern berechnen bzw. anpassen. Hierbei kann jedoch die Qualität des eingefüllten Schmieröls nicht automatisch berücksichtigt werden.

In der Patentliteratur sind bereits Farbstoffe zum Markieren von Kraftstoffen bekannt geworden. So schlägt die US 6,274,381 B1 vor in einem Kraftstoff zwei oder mehr sichtbare Farbstoffe einzusetzen, deren Absorptionsmaxima bei unterschiedlichen Wellenlängen liegen. Wird eine Probe eines solchen markierten Kraftstoffes in ein geeignetes Laborgerät gegeben, so kann der Indikator bestimmt werden. Gemäß der US 6,274,381 B1 wird hierzu eine Lichtquelle eingesetzt und die durch die Indikatoren bedingte Absorption ermittelt.

Ein anderes Verfahren ist aus der US 5,928,954 bekannt. In dieser Schrift wird vorgeschlagen, in der zu markierenden Flüssigkeit fluoreszierenden Farbstoff einzusetzen. Die Detektierung des Indikators erfolgt in einem Laborgerät, welches eine Probenaufnahme aufweist, in die eine kleine Menge des zu untersuchenden Stoffes eingebracht wird. Die Probe wird dann mittels Laserdioden bestrahlt und die auftretende, durch den fluoreszierenden Farbstoff bedingte Fluoreszenz gemessen.

Ein weiterer fluoreszierender Farbstoff für Kraftstoffe ist aus der US 5,729,967 bekannt.

US 5,958,780 offenbart eine Messvorrichtung zur Detektion wenigstens eines in einem Kraftstoff enthaltenden fluoreszierenden und/oder lichtabsorbierenden Indikators miteiner durch ein lichtdurchlässiges Material gebildeten Meßstrecke, die von dem Kraftstoff durchflossen wird, wenigstens einer Lichtquelle, die auf die Meßstrecke strahlt, einem Lichtempfangsgerät, auf das Licht trifft, das durch den durch die Meßstrecke strömenden Kraftstoff hindurchtritt und/oder von dem Indikator aufgrund eines Fluoreszenzeffekts ausgeht und das ein entsprechendes von der Stärke des auftreffenden Lichts abhängiges Meßsignal erzeugt, und einer Auswerteeinheit zur Auswertung des Meßsignals. Die Messvorrichtung ist an einer von einem Vorratstank wegführenden Leitung angeordnet, wobei nicht näher spezifiziert wird, was sich am anderen Ende der Leitung befindet.

US 5,225,679 offenbart eine in einer von einem Vorratstank zu einem Kraftfahrzeug führenden Leitung angeordnete Messvorrichtung zur Bestimmung der Eigenschaften des Kraftstoffs mittels Infrarotabsorptionsspektroskopie.

Die vorliegende Erfindung stellt sich die Aufgabe, eine automatische Detektierung der Identität eines in einer Maschine enthaltenen Betriebsstoffes zu ermöglichen.

Diese Aufgabe wird gelöst durch eine Maschine, insbesondere Kraftmaschine eines Fahrzeugs, mit einer darin integrierten Vorrichtung zum automatischen Detektieren von wenigstens einem in einem flüssigen Betriebsstoff, nämlich Schmieröl, Motoröl oder Hydrauliköl, enthaltenen fluoreszierenden und/oder lichtabsorbierenden Indikator während des Einfüllvorgangs des Betriebsstoffs in die Maschine, wobei die Vorrichtung eine Einfüllrohr für den Betriebsstoff, durch welches der einzufüllende Betriebsstoff in den Betriebsstoffvorrat der Maschine gelangt, eine durch ein lichtdurchlässiges Material gebildete Messstrecke, welche beim Einfüllen des Betriebsstoffs in das Einfüllrohr mit dem Betriebsstoff zumindest teilweise gefüllt oder durchflossen wird, wenigstens eine Lichtquelle, welche auf die Messstrecke strahlt, ein Lichtempfangsgerät, auf das Licht trifft, welches beim Durchströmen der Messstrecke durch den Betriebsstoff hindurchtritt und/oder von dem Indikator aufgrund eines Fluoreszenzeffektes ausgeht, und das wenigstens ein von der Stärke des auf das Lichtempfangsgerät auftreffenden Lichts abhängiges Messsignal erzeugt, und eine Auswerteeinheit, in welcher das wenigstens eine Messsignal des Lichtempfangsgeräts ausgewertet wird, aufweist.

Durch die erfindungsgemäße Gestaltung ist es erstmals möglich, einen flüssigen Betriebsstoff, insbesondere dessen Identität oder Qualität, automatisch festzustellen, wenn dieser in eine Maschine eingefüllt wird.

Die Erfindung hat erkannt, dass üblicherweise verwendete Betriebsstoffe in ihrem Absorptionsspektrum Bereiche mit einer deutlich verringerten Absorption aufweisen. Für Schmieröle hat sich ergeben, dass im Bereich von 500 bis 1000 nm keine oder eine verminderte Absorption auftritt, und sich mithin diese Bereiche zur Markierung mit Indikatoren besonders anbieten. Im Bereich oberhalb 500 nm ist eine Anregung der Fluoreszenzindikatoren gut möglich, da das anregende Licht nicht oder kaum durch den Betriebsstoff absorbiert wird. Gleichermaßen kann auch das vom Fluoreszenzindikator emittierte Licht in dem Bereich über 500 nm besonders gut bestimmt werden, da die Absorption des Betriebsstoffs das Messergebnis nicht oder nur wenig beeinflusst.

Erfindungsgemäß können Farbstoffe, insbesondere fluoreszierende Farbstoffe als Indikatoren dem Betriebsstoff zugesetzt werden. Diese können durch die in die erfindungsgemäße Maschine integrierte Vorrichtung beim Einfüllen des Betriebsstoff in die Maschine automatisch detektiert werden. Dementsprechend weist die Vorrichtung neben einem Einfüllrohr für den Betriebsstoff eine durch ein lichtdurchlässiges Material gebildete Messstrecke auf, welche beim Einfüllen des Betriebsstoffs in die Maschine mit dem Betriebsstoff zumindest teilweise gefüllt oder durchflossen wird. Mit Hilfe der Lichtquelle und des Lichtempfangsgeräts können der bzw. die Indikatoren und deren Konzentration gemessen werden. Das hieraus resultierende Messsignal wird dann durch eine Auswerteeinheit weiter verarbeitet. Zum Beispiel ist es möglich die Messsignale mit vorab in einer Auswertungsmatrix gespeicherten Daten zu vergleichen und auf diese Weise eine Information über den eingefüllten Betriebsstoff in der Maschine zu erhalten. Diese Information kann dann automatisch weiter verwertet werden, beispielsweise zur Berechnung eines an die Qualität des eingefüllten Betriebsstoffs angepassten Betriebsstoffwechselintervalls.

Gemäß einer vorteilhaften Ausgestaltung ist vorgesehen, dass das Lichtempfangsgerät wenigstens zwei Lichtsensoren aufweist, welche von einander abweichende Frequenzbereiche aufweisen und jeweils ein Messsignal erzeugen. Auf diese Weise können von der Vorrichtung eine Mehrzahl von Indikatoren gemessen werden. Berücksichtigt man zudem, dass erfindungsgemäß unterschiedliche Konzentrationsschwellen der Indikatoren bestimmt werden können, so ergibt sich eine Vielzahl von Kodierungsmöglichkeiten. Bei der Verwendung von zwei Indikatoren und vier Konzentrationsstufen ergeben sich bereits 16 Kodierungsmöglichkeiten. Bei der Verwendung von drei Farbstoffen und vier Konzentrationsstufen erhöht sich diese Anzahl auf 64 und steigt bei der Verwendung von vier Indikatoren auf 256 Codierungsmöglichkeiten.

Gemäß einer vorteilhaften Ausgestaltung der Erfindung ist vorgesehen, dass die Lichtquelle und das Lichtempfangsgerät auf die Messstrecke ausgerichtet und in einem Winkel von 0 bis 170 Grad um die Messstrecke angeordnet sind. Besonders vorteilhafterweise sind Lichtquelle und Lichtempfangsgerät in einem Winkel von 30 bis 140, insbesondere 60 bis 120 Grad angeordnet. Hierdurch wird bei der Verwendung von fluoreszierenden Farbstoffen ein besonders gutes Messsignal erreicht.

Gemäß einer vorteilhaften Ausgestaltung der Erfindung ist vorgesehen, dass das Einfüllrohr in Durchflussrichtung vor der Messstrecke einen in die Messstrecke mündenden Abschnitt mit einer Querschnittsverringerung aufweist. Diese Querschnittsverringerung ist insbesondere oberhalb der Messstrecke angeordnet, wobei es genügt, wenn nur ein Teilstrom des eingefüllten Betriebsstoffes durch die Messstrecke hindurchtritt. Vorteil dieser Gestaltung ist, dass aufgrund der Querschnittsverringerung eine vollständige Füllung der Messstrecke und damit konstante und bekannte Messbedingungen erreicht werden können.

Erfindungsgemäß ist weiterhin vorgesehen, dass die Messstrecke als Messrohr ausgebildet ist, das direkt oder indirekt in den Betriebsstoffvorrat der Maschine mündet.

Eine weitere Verbesserung wird dadurch erreicht, dass mehrere Lichtquellen vorgesehen sind, welche in voneinander abweichenden Frequenzbereichen strahlen, hierdurch wird die Detektierung von verschiedenen Indikatoren erleichtert.

Gemäß einer vorteilhaften Ausgestaltung der Erfindung ist vorgesehen, dass die Lichtquellen durch LED und/ oder Laserdioden mit unterschiedlichen Wellenlängen gebildet werden. Die vorliegende Erfindung sieht darüber hinaus ein Verfahren vor, zum automatischen Detektieren von wenigstens einem in einem flüssigen Betriebsstoff, nämlich Schmieröl, Motoröl oder Hydrauliköl, enthaltenen fluoreszierenden oder lichtabsorbierenden Indikator während des Einfüllvorgangs des Betriebsstoffs in eine Maschine, insb. eine Kraftmaschine eines Fahrzeugs, mit folgenden Schritten:
Einfüllen des zu detektierenden Betriebsstoffs in ein Einfüllhrohr, durch das der Betriebsstoff in den Betriebsstoffvorrat der Maschine gelangt und wobei der flüssige Betriebsstoff eine Meßstrecke wenigstens teilweise füllt oder durchfließt,
   - Bestrahlung des zu detektierenden Betriebsstoffes in des Meßstrecke mit wenigstens einer Lichtquelle,
   - Auffangen von Licht, welches den Betriebsstoff in der Messstrecke durchtritt und/oder von dem in diesem enthaltenen Indikator aufgrund eines Fluoreszenzeffektes ausgeht, durch ein Lichtempfangsgerät, wobei die Intensität des Lichts von dem wenigstens einen Indikator oder dessen Konzentration beeinflusst wird,
   - Erzeugen wenigstens eines die Intensität des auf das Lichtempfangsgeräts treffenden Lichts widergebenden Messsignals,
   - Auswertung des wenigstens einen Messsignals in einer Auswerteeinheit und Vergleich mit gespeicherten Werten.

Vorteilhaft ist hierbei, dass das sich aus der Auswertung der Messsignale ergebende Signal in der Maschine weiter verwendet werden kann. Beispielsweise kann die Identität oder eine andere Information über den eingefüllten Betriebsstoffs automatisch bestimmt und automatisch, beispielsweise im Bordcomputer weiter verarbeitet werden. So könnte für den Fall, dass ein ungeeigneter Betriebsstoff eingefüllt wird, das Starten der Maschine verhindert oder der Betriebsbereich so beschränkt werden, dass keine Schäden zu befürchten sind. Zudem ist es möglich, dass aufgrund der erzeugten Signale der Betriebsstoffwechselintervall in Abhängigkeit vom eingefüllten Betriebsstoff berechnet oder angepasst wird.

Vorteilhafterweise ist der wenigstens eine Indikator ein fluoreszierender Farbstoff, der durch die Lichtquelle in der Messstrecke zu einer Fluoreszenzstrahlung angeregt wird, wobei die Fluoreszenzstrahlung wenigstens einen Teil des durch das Lichtempfangsgerät aufgefangenen Lichts bildet.

Eine weitere Verbesserung wird dadurch erzielt, dass der Betriebsstoff wenigstens zwei in verschiedenen Frequenzbereichen wirkende Indikatoren enthält und das durch wenigstens zwei in den unterschiedlichen Frequenzbereichen sensible Sensoren des Lichtempfangsgeräts die Indikatoren, insbesondere deren Konzentration, detektiert werden.

Erfindungsgemäß ist weiterhin vorgesehen, dass das oder die von dem Lichtempfangsgerät erzeugten Messsignale mit der Konzentration des wenigstens einen Indikators in den Betriebsstoff korrelieren.

Besonders vorteilhafterweise bildet einer der Indikatoren des Betriebsstoffes einen Referenzindikator, anhand dessen das Lichtempfangsgerät ein Referenzsignal generiert. Auf diese Weise kann insbesondere die Auswertung der Messsignale erleichtert werden.

Gemäß einer Weiterbildung dieses Erfindungsgedankens ist vorgesehen, dass die Auswerteeinheit anhand des Verhältnisses der Stärke des wenigstens einen Messsignals zu der Stärke des Referenzsignals das wenigstens eine Messsignal auswertet. Auf diese Weise kann, auch unter veränderlichen Bedingungen, wie z.B. wechselndem Füllungsgrad der Messstrecke mit Betriebsstoff, die Konzentrationen der in dem Betriebsstoff enthaltenen Indikatoren zuverlässig bestimmt werden. Hierbei genügt es, das Verhältnis der Indikatoren zu bestimmen, indem das bzw. die Messsignale mit dem Referenzsignal ins Verhältnis gesetzt werden. Besonders einfach ist die Auswertung dann, wenn der Referenzindikator in stets gleichbleibender Konzentration vorhanden ist.

Eine weitere Verbesserung wird dadurch erreicht, dass die Auswerteeinheit dem wenigstens einen Messsignal ein Qualitätssignal zuordnet. Dies kann beispielsweise durch Vergleich der durch die Messsignale bestimmten Konzentrationsstufen der verschiedenen Indikatoren mit einer Tabelle oder Wertematrix erfolgen, in der jeweils Kombinationen der Konzentrationsstufen von Indikatoren bestimmte Qualitäten oder andere Informationen über den Betriebsstoff zugeordnet werden. Die Auswerteeinheit kann dabei z.B. in den Bordcomputer eines Kraftfahrzeuges integriert sein.

Eine weitere Verbesserung wird dann erreicht, wenn das Qualitätssignal für die automatische Bestimmung des Zeitpunkts für den nächsten Betriebsstoffwechsel verwendet wird. Auf diese Weise kann erstmals in die Berechnung oder Anpassung des Service-Intervalls bzw. Betriebsstoffwechsels die Qualität und Herkunft des eingefüllten Betriebsstoffes berücksichtigt werden.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Es zeigen
Figur 1: Eine schematische Darstellung einer in einer erfindungsgemäßen Vorrichtung;
Figur 2: Die Absorptionsspektren verschiedener Schmieröle.

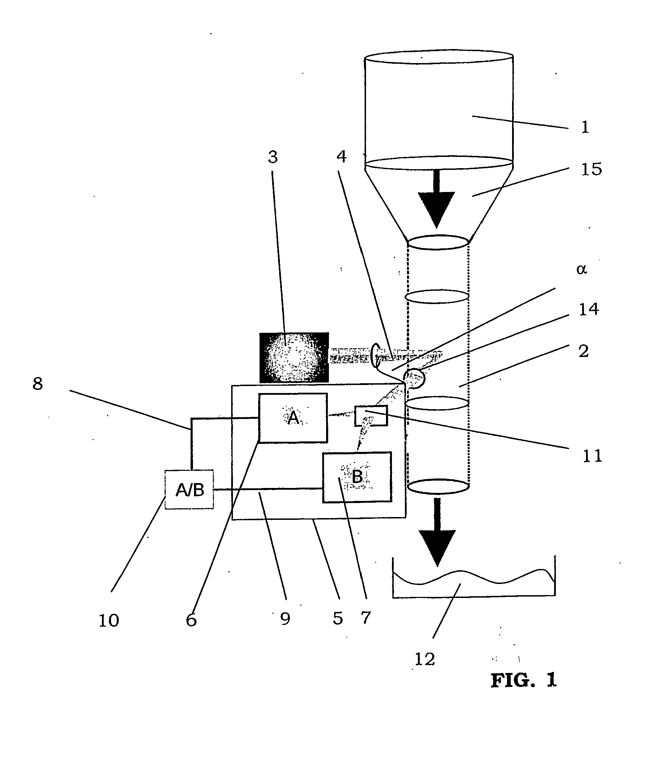

In Figur 1 ist schematisch eine Vorrichtung zum automatischen Detektieren von wenigstens einem in einem flüssigen Betriebsstoff ent-haltenen Indikator während des Einfüllvorgangs des Betriebsstoffs in eine Maschine dargestellt.

Die Vorrichtung weist zum Einfüllen des Betriebsstoffs ein Einfüllrohr 1 für den Betriebsstoff auf. In der vorliegenden Anmeldung soll jedes den Einfüllvorgang von Betriebsstoff in die Maschine ermöglichende bzw. erleichternde Bauteil als Einfüllrohr gelten, unabhängig von dessen Querschnittsform oder dem Verhältnis von Durchmesser und Länge. Das Einfüllrohr kann insbesondere rund oder eckig ausgebildet sein. Bei der dargestellten Ausführungsform weist das längliche Einfüllrohr 1 einen kreisförmigen Querschnitt auf. Dabei ist das Einfüllrohr der Vorrichtung derart ausgebildet und angeordnet, dass eingefüllter Betriebsstoff durch das Einfüllrohr 1 unmittelbar oder mittelbar in den Betriebsstoffvorrat 12, beispielsweise die Ölwanne der Maschine gelangt.

Die Vorrichtung weist darüber hinaus eine durch ein lichtdurchlässiges Material gebildete Messstrecke 2 auf. Bei der in Figur 1 dargestellten Ausführungsform wird diese durch ein beispielsweise aus klarem Kunststoff oder Glas bestehendem Rohrabschnitt gebildet. Die Messstrecke 2 wird beim Einfüllen des Betriebsstoffs in das Einfüllrohr 1 zumindest teilweise gefüllt oder durchflossen. Dabei ist es ausreichend, wenn nur ein Teil des eingefüllten Betriebsstoffs zu Messzwecken durch die Messstrecke 2 fließt.

Weiterhin weist die Vorrichtung eine Lichtquelle 3 auf, welche auf die Messstrecke 2 strahlt und auf diese gerichtet ist. Bei dem von der Lichtquelle 3 ausgehenden Licht kann es sich um einen gebündelten Strahl 4 handeln, welcher insbesondere auf die Mitte der Messstrecke 2 fokussiert ist.

Die Vorrichtung weist darüber hinaus ein Lichtempfangsgerät 5 auf. Auf dieses trifft Licht welches durch den Betriebsstoff beim Durchströmen der Messstrecke 2 hindurch tritt und/oder dem Betriebsstoff aufgrund eines Fluoreszenzeffektes ausgeht (Licht 14).

Das dargestellte Lichtempfangsgerät 5 weist zwei Lichtsensoren 6, 7 auf. Diese haben von einander abweichende Frequenzbereiche. Die Maxima der spektralen Empfindlichkeit der Lichtsensoren 6, 7 ist verschieden und an die eingesetzten Indikatoren angepasst. Auf diese Weise kann durch je einen Lichtsensor 6,7 das Vorhandensein und/oder die Konzentration eines Indikators in dem Betriebsstoff bestimmt werden. Zusätzlich zu den dargestellten zwei Sensoren können auch weitere Sensoren vorgesehen werden, wobei erfindungsgemäß auch ein einziger Sensor ausreichend sein kann.

Das Lichtempfangsgerät 5 erzeugt mittels der Lichtsensoren 6, 7 insbesondere mehrere Messsignale. Dargestellt in Figur 1 ist ein Messsignal 8 des Lichtsensors 6 und ein Messsignal 9 des Lichtsensors 7. Als Sensoren 6, 7 des Lichtempfangsgeräts 5 können insbesondere PIN-Dioden eingesetzt werden. Das Lichtempfangsgerät 5 weist zudem einen Strahlteiler 11 auf, durch den eintreffendes Licht gleichmäßig auf die Lichtsensoren 6,7 verteilt wird.

Figur 1 zeigt darüber hinaus eine Auswerteeinheit 10 in welcher das wenigstens eine Messsignal 8, 9 des Lichtempfangsgeräts 5 ausgewertet wird.

Die Lichtquelle 3 und das Lichtempfangsgerät 5 sind auf die Messstrecke 2 des Einfüllrohres 1 der Maschine ausgerichtet und in einem Winkel α von 0 bis 170 Grad um die Messstrecke 2 herum angeordnet. Hierbei hat sich ein Winkel von 30 bis 140 Grad, vorzugsweise 60 bis 120 Grad besonders bewährt. Sofern die Indikatoren und ihre Konzentration in dem Betriebsstoff nicht durch Fluoreszenzmessung sondern durch Absorptionsmessung bestimmt werden sollen, wird das Lichtempfangsgerät 5 direkt gegenüber der Lichtquelle 3, also insbesondere in einem Winkel α von 180° zu dieser angeordnet.

Bei der in Figur 1 dargestellten Ausführungsform der Vorrichtung weist das Einfüllrohr 1 einen Abschnitt 15 mit einer Querschnittsverringerung auf, der in Durchflussrichtung vor der Messstrecke 2 angeordnet ist. Aufgrund der Querschnittsverengung kann eine vollständige Füllung der Messstrecke mit dem Betriebsstoff erreicht werden.

Weiterhin kann vorgesehen sein, dass zusätzlich zur dargestellten Lichtquelle 3 weitere Lichtquellen vorgesehen sind, die in einem von der Lichtquelle 3 abweichenden Frequenzbereich strahlen.

Die Lichtquellen können erfindungsgemäß besonders einfach durch LED und/oder Laserdioden gebildet werden. Die LED bzw. Laserdioden können unterschiedliche Wellenlängen haben.

Erfindungsgemäß ist die in Figur 1 dargestellte Vorrichtung in eine Maschine, insbesondere eine Kraftmaschine eines Fahrzeugs integriert.

Als Indikatoren werden den Betriebsstoffen einer, vorzugsweise zwei oder mehr verschiedene Fluoreszenzfarbstoffe hinzugefügt. Hierfür ist bereits eine Konzentration im Bereich 10⁻⁷ bis 10⁻⁹ Mol ausreichend. Es können jedoch auch höhere Konzentrationen, insb. bis 10⁻⁴ Mol verwendet werden. Als Fluoreszenzfarbstoffe können öllösliche Farbstoffe aus der Gruppe der Coumarine, Fluoresceine, Rhodamine, Oxazine und Carbocyanine oder deren öllösliche Modifikationen eingesetzt werden. Aufgrund der niedrigen Konzentration der Indikatoren in den Betriebsstoffen werden die bestimmungsgemäßen Eigenschaften der Betriebsstoffe nicht oder nur unwesentlich beeinflusst. Der Farbstoff kann mit dem Auge nicht gesehen werden, da er in sehr niedrigen Konzentrationen zugegeben wird. Alternativ oder zusätzlich zu Fluoreszenzfarbstoffen können auch nicht fluoreszierende Farbstoffe, z.B. Diazofarbstoffe eingesetzt werden. Erfindungsgemäß werden öllösliche Farbstoffe eingesetzt, insbesondere Fluoreszenzfarbstoffe mit Emissionsmaxima in dem Bereich 500 nm bis 1000 nm.

Die Detektierung der eingesetzten Indikatoren erfolgt beim Einfüllvorgang durch Anregung durch die Lichtquellen 3, beispielsweise LED oder Laserdioden, in unterschiedlichen, auf die eingesetzten Farbstoffe abgestimmten Wellenlängenbereichen. In Abhängigkeit von den Fluoreszenzfarbstoffen können die Motoröle beispielsweise bei 370, 490 und/oder 570 bis 590 nm angeregt werden.

Durch das Lichtempfangsgerät wird sodann Licht aufgefangen. Bei der Verwendung von Fluoreszenzfarbstoffen wird von dem Indikator aufgrund des Fluoreszenzeffektes emittiertes Licht 14 aufgefangen. Bei Verwendung nicht fluoreszierender Farbstoffe wird das Licht verwendet, welches durch den Betriebsstoff hindurchtritt.

Die Sensoren 5, 6 des Lichtempfangsgeräts 5 erzeugen jeweils ein Messsignal 8, 9, welches die Intensität des auf das Lichtempfangsgerät 5 treffenden Lichts 14 wiedergeben. Dementsprechend kann durch die Auswerteeinheit 10 anhand der Messsignale 8, 9 das Vorhandensein sowie die Konzentration der Indikatoren in dem Betriebsstoff ermittelt werden.

Anhand eines Vergleichs der so ermittelten Konzentrationen bzw. Konzentrationsstufen der verschiedenen Indikatoren erfolgt ein Vergleich mit in einer Tabelle abgelegten Vergleichswerten. In Abhängigkeit hiervon wird die Identität des eingefüllten Betriebsstoffs ermittelt und ein Qualitätssignal erzeugt. Hierdurch ist es möglich, automatisch die Identität des eingefüllten Betriebsstoffes oder eine andere Information über diesen zu detektieren und die so erhalten Information maschinell weiterzuverarbeiten. Die Information über den eingefüllten Betriebsstoff kann zur Berechnung von Ölwechselintervallen verwendet werden. Zudem kann der Betrieb der Maschine unterbunden bzw. der Betriebsbereich eingeschränkt werden, sofern ein Betriebsstoff mit einer geringeren als der empfohlenen Spezifikation eingefüllt wird.

Die Auswertung wird dabei dadurch ermöglicht, dass die von dem Lichtempfangsgerät 5 erzeugten Messsignale 8, 9 mit der Konzentration des wenigstens einen Indikators in dem Betriebsstoff korrelieren.

Erfindungsgemäß kann zudem vorgesehen sein, dass einer der Indikatoren bzw. Farbstoffe des Betriebsstoffes ein Referenzindikator bildet. Dahinter steckt die Idee, den Referenzindikator entweder in einer wechselnden oder einer stets gleichbleibenden Konzentration in dem Betriebsstoff vorzusehen. Wenn beispielsweise der Lichtsensor 6 den Referenzindikator detektiert, so bildet das hieraus resultierende Messsignal 8 das Referenzsignal. Der Lichtsensor 7 detektiert hingegen einen weiteren Indikator des Betriebsstoffes und erzeugt ein von der Konzentration dieses Indikators in dem Betriebsstoff abhängiges Messsignal 9. In dem nun das Messsignal 9 mit dem Referenzsignal 8 ins Verhältnis gesetzt wird, kann stets zuverlässig die Konzentration des Indikators oder das Konzentrationsverhältnis der Indikatoren ermittelt werden. Dies kann auch bei wechselnden Messbedingungen erfolgen, z.B. dann, wenn die Messstrecke 2 nicht vollständig mit Betriebsstoff gefüllt ist. Auf diese Weise kann unter schwierigen oder wechselnden Bedingungen, z.B. auch ohne einen Abschnitt 15 mit Querschnittverengung, ein gutes Messergebnis erzielt werden.

Erfindungsgemäß wird die Detektierung der Indikatoren beim Einfüllen von Frischöl in die Maschine durchgeführt, so dass Zersetzungsprodukte, Verschmutzungen oder chemische Änderungen des Öls den Detektierungsvorgang nicht beeinflussen können.

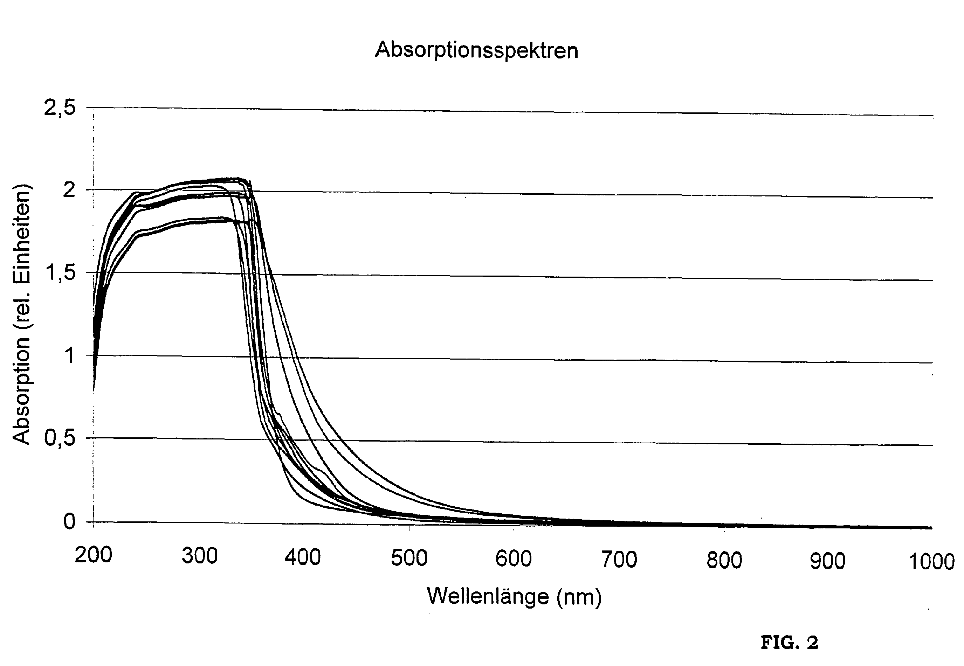

Figur 2 zeigt die gemessenen Absorptionsspektren einer Vielzahl von verschiedenen Motorenölen. Die Messungen zeigen deutlich, dass die Absorption in dem Bereich zwischen etwa 350 und 400 nm bei sämtlichen Produkten sehr stark abnimmt. Ab einem Wellenlängenbereich von etwa 500 nm liegt eine nur noch sehr geringe Absorption vor, welche weniger als ein Viertel derjenigen bei 300 nm beträgt. Für die meisten Motorenöle liegt die Fluoreszenz sogar noch wesentlich darunter. Daher bietet es sich erfindungsgemäß an, Fluoreszenzfarbstoffe zu verwenden, welche in dem Wellenlängenbereich 500 nm bis 1000 nm absorbieren und emittieren.

Beispiel: Der Betriebsstoff Motoröl wird mit zwei Fluoreszenzfarbstoffen in vorgegebenen Konzentrationen versehen, von denen der eine ein Emissionsmaximum bei 550 nm und der andere ein Emissionsmaximum von 650 nm aufweist. Die Lichtquelle 3 wird dementsprechend mit zwei LED's bestückt, die bei 490 nm oder 570 bis 590 nm emittieren. Die Detektierung der durch die Indikatoren hervorgerufenen Fluoreszenz erfolgt spektral separiert mit Hilfe des Strahlteilers 11 und verschiedenen Filtern durch zwei Sensoren 6, 7, welche als Halbleiterdetektoren ausgebildet sind. Verschiedene Motoröle werden durch verschiedene Farbstoffmischungsverhältnisse von beispielsweise 1:10, 2:10, 3:10 etc. bzw. 10:1, 10:2 etc. markiert. Dementsprechend können die Motoröle eindeutig aufgrund der an den beiden Detektoren 6, 7 gemessenen verschiedenen Messsignalverhältnisse von 0,1, 0,2, 0,3 bis 10 eindeutig identifiziert werden. In diesem Beispiel ergeben sich somit 19 Kodierungsmöglichkeiten.

## Patentansprüche

1. Maschine, insb. Kraftmaschine eines Fahrzeugs, mit einer darin integrierten Vorrichtung zum automatischen Detektieren von wenigstens einem in einem flüssigen Betriebsstoff, nämlich Schmieröl, Motoröl oder Hydrauliköl, enthaltenen fluoreszierenden und/oder lichtabsorbierenden Indikator während des Einfüllvorgangs des Betriebsstoffs in die Maschine, wobei die Vorrichtung ein Einfüllrohr (1) für den Betriebsstoff, durch welches der einzufüllende Betriebsstoff in den Betriebsstoffvorrat (12) der Maschine gelangt, eine durch ein lichtdurchlässiges Material gebildete Messstrecke (2), welche beim Einfüllen des Betriebsstoffs in das Einfüllrohr (1) mit dem flüssigen Betriebsstoff zumindest teilweise gefüllt oder durchflossen wird, wenigstens eine Lichtquelle (3), welche auf die Messstrecke (2) strahlt, ein Lichtempfangsgerät (5), auf das Licht (14) trifft, welches beim Durchströmen der Messstrecke (2) durch den Betriebsstoff hindurchtritt und/oder von dem Indikator aufgrund eines Fluoreszenzeffektes ausgeht, und das wenigstens ein von der Stärke des auf das Lichtempfangsgerät (5) auftreffenden Lichts (14) abhängiges Messsignal (8,9) erzeugt, und eine Auswerteeinheit (10), in welcher das wenigstens eine Messsignal (8,9) des Lichtempfangsgeräts (5) ausgewertet wird, aufweist.

2. Maschine nach Anspruch 1, **dadurch gekennzeichnet, dass** das Lichtempfangsgerät (5) wenigstens zwei Lichtsensoren (6,7) aufweist, welche voneinander abweichende Frequenzbereiche aufweisen und jeweils ein Messsignal (8,9) erzeugen.

3. Maschine nach Anspruch 1 oder 2, **dadurch gekennzeichnet, dass** die Lichtquelle (3) und das Lichtempfangsgerät (5) auf die Messstrecke (2) ausgerichtet und in einem Winkel von 0° bis 170° um die Messstrecke angeordnet sind.

4. Maschine nach einem der Ansprüche 1 bis 3, **dadurch gekennzeichnet, dass** das Einfüllrohr (1) in Durchflussrichtung vor der Messstrecke (2) einen in die Messstrecke (2) mündenden Abschnitt (15) mit einer Querschnittsverringerung aufweist.

5. Maschine nach einem der Ansprüche 1 bis 4, **dadurch gekennzeichnet, dass** die Messstrecke (2) als Messrohr ausgebildet ist, das direkt oder indirekt in den Betriebsstoffvorrat (12) der Maschine mündet.

6. Maschine nach einem der Ansprüche 1 bis 5, **dadurch gekennzeichnet, dass** mehrere Lichtquellen (3) vorgesehen sind, welche in voneinander abweichenden Frequenzbereichen strahlen.

7. Maschine nach Anspruch 6, **dadurch gekennzeichnet, dass** die Lichtquellen (3) durch LED und/oder Laserdioden mit unterschiedlichen Wellenlängen gebildet werden.

8. Maschine nach einem der Ansprüche 1 bis 7, **dadurch gekennzeichnet, dass** das Einfüllrohr (1) in die Messstrecke (2) mündet.

9. Verfahren zum automatischen Detektieren von wenigstens einem in einem flüssigen Betriebsstoff, nämlich Schmieröl, Motoröl oder Hydrauliköl, enthaltenen fluoreszierenden und/oder lichtabsorbierenden Indikator während des Einfüllvorgangs des Betriebsstoffs in eine Maschine, insb. eine Kraftmaschine eines Fahrzeugs, durch eine in die Maschine integrierte Vorrichtung, wobei das Verfahren folgende Schritte aufweist:
- Einfüllen des zu detektierenden flüssigen Betriebsstoffs in ein Einfüllrohr (13), durch das der Betriebsstoff in den Betriebsstoffvorrat der Maschine gelangt und wobei der flüssige Betriebsstoff eine Messstrecke (2) wenigstens teilweise füllt oder durchfließt,
- Bestrahlung des flüssigen Betriebsstoffes in der Messstrecke (2) mit wenigstens einer Lichtquelle (3),
- Auffangen von Licht (14), welches den Betriebsstoff in der Messstrecke (2) durchtritt und/oder von dem in diesem enthaltenen Indikator aufgrund eines Fluoreszenzeffektes ausgeht, durch ein Lichtempfangsgerät (5), wobei die Intensität des Lichts von dem wenigstens einen Indikator oder dessen Konzentration beeinflusst wird,
- Erzeugen wenigstens eines die Intensität des auf das Lichtempfangsgerät treffenden Lichts wiedergebenden Messsignals (8,9),
- Auswertung des wenigstens einen Messsignals (8,9) in einer Auswerteeinheit (10) und Vergleich mit gespeicherten Werten.

10. Verfahren nach Anspruch 9, **dadurch gekennzeichnet, dass** der wenigstens eine Indikator ein fluoreszierender Farbstoff ist, der durch die Lichtquelle (3) in der Messstrecke (2) zu einer Fluoreszenzstrahlung angeregt wird, und dass die Fluoreszenzstrahlung wenigstens einen Teil des durch das Lichtempfangsgerät (5) aufgefangenen Lichts bildet.

11. Verfahren nach Anspruch 9 oder 10, **dadurch gekennzeichnet, dass** der Betriebsstoff wenigstens zwei in verschiedenen Frequenzbereichen wirkende Indikatoren enthält und dass durch wenigstens zwei in den unterschiedlichen Frequenzbereichen sensible Sensoren des Lichtempfangsgeräts (5) die Indikatoren, insbesondere deren Konzentration, detektiert werden.

12. Verfahren nach einem der Ansprüche 9 bis 11, **dadurch gekennzeichnet, dass** das oder die von dem Lichtempfangsgerät (5) erzeugten Messsignale (8,9) mit der Konzentration des wenigstens einen Indikators in dem Betriebsstoff korrelieren.

13. Verfahren nach einem der Ansprüche 9 bis 12, **dadurch gekennzeichnet, dass** einer der Indikatoren des Betriebsstoffes einen Referenzindikator bildet, anhand dessen das Lichtempfangsgerät (5) ein Referenzsignal (8) generiert.

14. Verfahren nach Anspruch 13, **dadurch gekennzeichnet, dass** die Auswerteeinheit (10) anhand des Verhältnisses der Stärke des wenigstens einen Messsignals (9) zu der Stärke des Referenzsignals (8) das wenigstens eine Messsignal (9) auswertet.

15. Verfahren nach einem der Ansprüche 9 bis 14, **dadurch gekennzeichnet, dass** die Auswerteeinheit (10) dem wenigstens einen Messsignal (8,9) ein Qualitätssignal zuordnet.

16. Verfahren nach Anspruch 15, **dadurch gekennzeichnet, dass** das Qualitätssignal für die automatische Bestimmung des Zeitpunkts für den nächsten Betriebsstoffwechsel verwendet wird.

## Claims

1. Engine, in particular internal combustion engine of a vehicle, having a device which is integrated therein for automatically detecting at least one fluorescent and/or light-absorbing indicator contained in a liquid operating material, specifically lubricating oil, engine oil or hydraulic oil, during the process of filling the operating material into the machine, the device having a filling tube (1) for the operating material through which the operating material to be fed in passes into the operating material reservoir (12) of the engine, a measuring section (2) which is formed by a light-permeable material and which the liquid operating material at least partially fills or flows through as the operating material is fed into the filling tube (1), at least one light source (3) which irradiates onto the measuring section (2), a light-receiving device (5), on which the light (14) impinges and which passes through the operating material as the measuring section (2) is flowed through and/or light leaves the indicator owing to a fluorescent effect and which generates at least one measuring signal (8, 9) which is dependent on the strength of the light (14) which impinges on the light-receiving device (5), and an evaluation unit (10) in which the at least one measuring signal (8, 9) of the light-receiving device (5) is evaluated.

2. Engine according to Claim 1, **characterized in that** the light-receiving device (5) has at least two light sensors (6, 7) which have frequency ranges which differ from one another and each generate a measuring signal (8, 9).

3. Engine according to Claim 1 or 2, **characterized in that** the light source (3) and the light-receiving device (5) are aligned with the measuring section (2) and arranged at an angle of 0° to 170° around the measuring section.

4. Engine according to one of Claims 1 to 3, **characterized in that** the filling tube (1) has, upstream of the measuring section (2) in the direction of flow, a section (15) which opens into the measuring section (2) and has a constriction in its cross section.

5. Engine according to one of Claims 1 to 4, **characterized in that** the measuring section (2) is embodied as a measuring tube which opens directly or indirectly into the operating material reservoir (12) of the engine.

6. Engine according to one of Claims 1 to 5, **characterized in that** a plurality of light sources (3) are provided which irradiate in different frequency ranges.

7. Engine according to Claim 6, **characterized in that** the light sources (3) are formed by LEDs and/or laser diodes with different wavelengths.

8. Engine according to one of Claims 1 to 7, **characterized in that** the filling tube (1) opens into the measuring section (2).

9. Method for automatically detecting at least one fluorescent and/or light-absorbing indicator contained in a liquid operating material, specifically lubricating oil, engine oil or hydraulic oil, during the process of filling the operating material into an engine, in particular an internal combustion engine of a vehicle, by means of a device which is integrated into the engine, the method having the following steps:
- the liquid operating material to be detected is fed into a filling tube (13) through which the operating material passes into the operating material reservoir of the engine, the liquid operating material at least partially filling or flowing through a measuring section (2),
- at least one light source (3) irradiates the liquid operating material in the measuring section (2),
- light (14) which passes through the operating material in the measuring section (2) and/or leaves the indicator contained therein owing to a fluorescent effect is received by a light-receiving device (5), with the intensity of the light being influenced by the at least one indicator or its concentration,
- at least one measuring signal (8, 9) which represents the intensity of the light impinging on the light-receiving device is generated,
- the at least one measuring signal (8, 9) is evaluated in an evaluation unit (10) and compared with stored values.

10. Method according to Claim 9, **characterized in that** the at least one indicator is a fluorescent colorant which is excited by the light source (3) in the measuring section (2) to emit fluorescent radiation, and **in that** the fluorescent radiation forms at least part of the light received by the light-receiving device (5).

11. Method according to Claim 9 or 10, **characterized in that** the operating material contains at least two indicators which act in different frequency ranges, and **in that** at least two sensors of the light-receiving device (5) which are sensitive in the different frequency ranges detect the indicators, in particular their concentration.

12. Method according to one of Claims 9 to 11, **characterized in that** the measuring signal or signals (8, 9) which are generated by the light-receiving device (5) correlate with the concentration of the at least one indicator in the operating material.

13. Method according to one of Claims 9 to 12, **characterized in that** one of the indicators of the operating material forms a reference indicator by means of which the light-receiving device (5) generates a reference signal (8).

14. Method according to Claim 13, **characterized in that** the evaluation unit (10) evaluates the at least one measuring signal (9) by means of the ratio of the strength of the at least one measuring signal (9) to the strength of the reference signal (8).

15. Method according to one of Claims 9 to 14, **characterized in that** the evaluation unit (10) assigns a quality signal to the at least one measuring signal (8, 9).

16. Method according to Claim 15, **characterized in that** the quality signal is used for automatically determining the time for the next change of operating material.

## Revendications

1. Machine, notamment moteur d'un véhicule automobile, avec un dispositif qui y est intégré pour détecter automatiquement au moins un indicateur fluorescent et/ou photoabsorbant contenu dans un consommable liquide, à savoir du lubrifiant, de l'huile moteur ou de l'huile hydraulique pendant le processus de remplissage du consommable dans la machine, le dispositif comportant un tube de remplissage (1) pour le consommable, à travers lequel le consommable à remplir arrive dans la réserve de consommable (12) de la machine, un trajet de mesure (2) formé d'un matériau transparent, qui lors du remplissage du consommable dans le tube de remplissage (1) est au moins partiellement rempli ou traversé par le consommable liquide, au moins une source lumineuse (3) qui rayonne sur le trajet de mesure (2), un récepteur de lumière (5) sur lequel la lumière (14) est incidente, qui lors de la circulation à travers le trajet de mesure (2) passe dans le consommable et/ou qui part de l'indicateur du fait d'un effet de fluorescence, et qui délivre au moins un signal de mesure (8, 9) dépendant de l'intensité de la lumière (14) incidente sur le récepteur de lumière (5) et une unité d'évaluation (10) dans laquelle le au moins un signal de mesure (8, 9) du récepteur de lumière (5) est évalué.

2. Machine selon la revendication 1, **caractérisée en ce que** le récepteur de lumière (5) comporte au moins deux capteurs de lumière (6, 7) qui présentent des gammes de fréquences différentes les unes des autres et délivrent chacun un signal de mesure (8, 9).

3. Machine selon la revendication 1 ou 2, **caractérisée en ce que** la source lumineuse (3) et le récepteur de lumière (5) sont orientés sur le trajet de mesure (2) et sont disposés autour du trajet de mesure sous un angle de 0° à 170°.

4. Machine selon l'une quelconque des revendications 1 à 3, **caractérisée en ce que** le tube de remplissage (1) comporte en direction de passage du trajet de mesure (2) un tronçon (15) débouchant dans le trajet de mesure (2) avec un rétrécissement de section transversale.

5. Machine selon l'une quelconque des revendications 1 à 4, **caractérisée en ce que** le trajet de mesure (2) est conçu sous la forme d'un tube de mesure, qui débouche directement ou indirectement dans la réserve de consommable (12) de la machine.

6. Machine selon l'une quelconque des revendications 1 à 5, **caractérisée en ce que** plusieurs sources lumineuses (3) qui rayonnent dans des gammes de fréquences différentes les unes des autres sont prévues.

7. Machine selon la revendication 6, **caractérisée en ce que** les sources lumineuses (3) sont formées par des DEL et/ou des diodes laser avec différentes longueurs d'ondes.

8. Machine selon l'une quelconque des revendications 1 à 7, **caractérisée en ce que** le tube de remplissage (1) débouche dans le trajet de mesure (2).

9. Procédé de détection automatique par un dispositif intégré dans la machine d'au moins un indicateur fluorescent et/ou photoabsorbant contenu dans un consommable liquide, à savoir du lubrifiant, de l'huile moteur ou de l'huile hydraulique pendant le processus de remplissage du consommable dans une machine, notamment un moteur d'un véhicule, le procédé comportant les étapes suivantes :
- remplissage du consommable liquide à détecter dans un tube de remplissage (13), à travers lequel le consommable arrive dans la réserve de consommable de la machine, alors que le consommable liquide remplit ou traverse au moins partiellement un trajet de mesure (2),
- irradiation du consommable liquide dans le trajet de mesure (2) avec au moins une source lumineuse (3),
- captage de lumière (14) qui traverse le consommable dans le trajet de mesure (2) et/ou qui part de l'indicateur qui y est contenu, du fait d'un effet de fluorescence par un récepteur de lumière (5), l'intensité de la lumière étant influencée par le au moins un indicateur ou par sa concentration;
- délivrance d'au moins un signal de mesure (8,9) restituant l'intensité de la lumière incidente sur le récepteur de lumière,
- évaluation du au moins un signal de mesure (8,9) dans une unité d'évaluation (10) et comparaison avec des valeurs mémorisées.

10. Procédé selon la revendication 9, **caractérisé en ce que** le au moins un indicateur est un colorant fluorescent, qui est excité par la source lumineuse (3) pour émettre un rayonnement fluorescent dans le trajet de mesure (2) et **en ce que** le rayonnement fluorescent forme au moins une partie de la lumière captée par le récepteur de lumière (5).

11. Procédé selon la revendication 9 ou 10, **caractérisé en ce que** le consommable contient au moins deux indicateurs agissant dans différentes gammes de fréquences, et **en ce que** les indicateurs, notamment leur concentration, sont détectés par au moins deux capteurs sensibles dans les différentes gammes de fréquences du récepteur de lumière (5).

12. Procédé selon l'une quelconque des revendications 9 à 11, **caractérisé en ce que** le signal ou les signaux de mesure (8, 9) délivrés par le récepteur de lumière (5) sont en corrélation avec la concentration du au moins un indicateur dans le consommable.

13. Procédé selon l'une quelconque des revendications 9 à 12, **caractérisé en ce que** l'un des indicateurs du consommable fait office d'indicateur de référence, à l'aide duquel le récepteur de lumière (5) génère un signal de référence (8).

14. Procédé selon la revendication 13, **caractérisé en ce que** l'unité d'évaluation (10) évalue le au moins un signal de mesure (9) à l'aide du rapport de l'intensité du au moins un signal de mesure (9) à l'intensité du signal de référence (8).

15. Procédé selon l'une quelconque des revendications 9 à 14, **caractérisé en ce que** l'unité d'évaluation (10) attribue un signal de qualité au au moins un signal de mesure (8, 9).

16. Procédé selon la revendication 15, **caractérisé en ce que** le signal de qualité est utilisé pour la détermination automatique du moment du prochain remplacement de consommable.
